# EUROPEAN PATENT SPECIFICATION

(11) **EP 1 607 025 B1**
(45) Date of publication and mention of the grant of the patent: **14.05.2008**
(21) Application number: 05105219.9
(22) Date of filing: 14.06.2005
(51) Int. Cl.: A47C 23/06, B62D 33/06

(54) **Bed for a vehicle cabin, especially for an industrial vehicle, with slats integrated into the mattress containing frames, vehicle equipped with such bed, and method of production of the bed**
Bett mit Lattenboden für eine Fahrzeugkabine, inbesondere für ein Lastfahrzeug, Matratze mit Rahmen und integrierten Latten, mit einem derartigen Bett ausgerüstetes Fahrzeug, und Produktionsverfahren
Lit pour cabine de véhicule, de préférence un véhicule industriel, avec des lattes intégrées dans le matelas à cadres, véhicule équipé avec un tel lit, méthode de production du lit

(30) Priority: 16.06.2004 IT MI20041208
(43) Date of publication of application: 21.12.2005
(73) Proprietor: IVECO S.p.A., 10156 Torino (IT)
(72) Inventor: Ropolo, Bruno, 14010 San Paolo Solbrito (IT)
(74) Representative: Borsano, Corrado

(56) References cited:
- EP-A- 0 981 983
- DE-U- 20 002 383
- US-A1- 2004 000 808

## Description

### FIELD OF THE INVENTION

This invention refers to a bed for a vehicle cabin, especially for an industrial vehicle, with slats integrated into the mattress containing frames, a vehicle equipped with such bed, and method of production of the bed.

Cabins of industrial vehicles, and especially those of long distance trucks, are usually equipped with beds that are installed in the space behind the seats, so that the driver or passenger can rest inside the actual cabin.

In the prior art, such beds comprise a supporting structure, possibly split into several parts. Such structure is anchored to the cabin of the vehicle, possibly in such a way as to enable the bed to be folded away or removed, and houses one or more mattresses that rest on a spring base, possibly of the type with flexible transverse slats, usually made of wood.

An example of a bed for a vehicle cabin is disclosed in DE20002383U1. The mentioned German utility model shows an example of a traditional bed provided with slats adapted to be mounted on a vehicle according to the preamble of claim 1.

Problems have arisen in connection with the production of such beds, due to the need to reduce production costs, by limiting the number of components and overall weight, and also to the need to occupy as little space as possible in a small place, such as a vehicle cabin, without affecting the standard of comfort.

The purpose of this invention is to solve these problems with a bed for a vehicle cabin, especially for an industrial vehicle, that does not require the use of a spring bed base to support the mattresses.

This invention relates to a bed for a vehicle cabin, especially for an industrial vehicle, characterized by the fact that it comprises one or more mattress containing frames that integrate flexible slats instead of a spring base to support the mattresses.

In particular, this invention relates to a bed for a vehicle cabin, especially for an industrial vehicle, with slats integrated into the mattress containing frames, a vehicle equipped with such bed, and a method of production of the bed, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, of which:
figures 1a, 1b, 1c illustrate an alternative embodiment of the bed according to this invention, respectively in a view from the bottom, a perspective top view with all the parts in the horizontal position, and with the central portion folded upwards;
figures 2a, 2b are views respectively from the bottom and from the top of a containing frame of the bed;
figures 3a, 3b illustrate the containing frame of the bed with a mattress inserted.

In the drawings the same reference numbers and letters are used to identify the same elements.

The basic idea of this invention consists of integrating the slats of the spring base that supports the mattresses into the actual mattress containing frames, and of constructing the containing frames using a lightweight material with a certain degree of flexibility, depending on the shape and thickness of the layer, such as plastics.

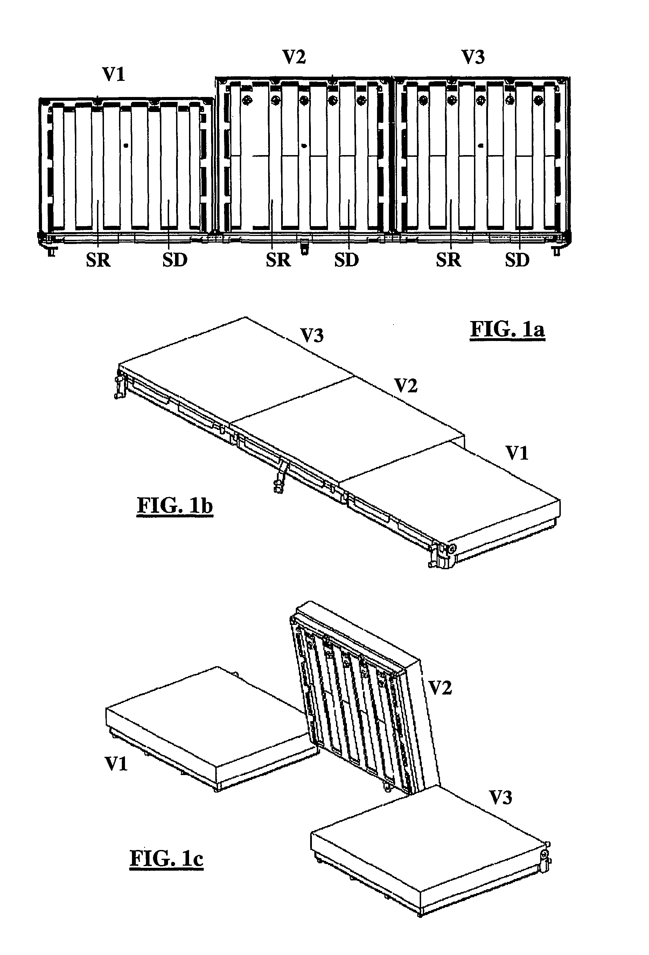

Figures 1a, 1b, 1c illustrate an alternative embodiment of the bed according to this invention, divided into three parts, V1, V2, V3, respectively in a front view from the bottom (fig. 1a), in a perspective top view with all the parts in the horizontal position (fig. 1 b), and with the central portion folded upwards (fig. 1 c).

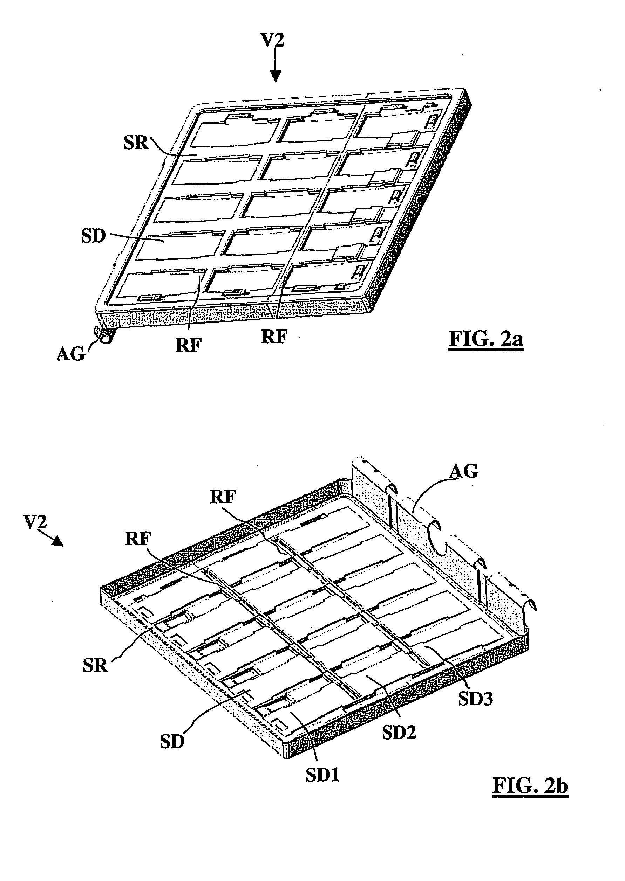

As shown in figures 2a and 2b, each portion of the bed is shaped as a containing frame to support the relative mattress. The base of the containing frame is made so as to integrate a certain number of transverse slats.

Fig. 2a illustrates the containing frame V2 in a view from the bottom, while fig. 2b is a top view. The containing frames can be folded upwards in the vehicle cabin, or removed, by means of the appropriate hooks AG, that fit into the relative supports in the vehicle cabin, not shown in the figures.

The structure of the base of the containing frame is appropriately reinforced and made sufficiently stiff to provide the degree of firmness that is required.

As shown in the figures, the base of the containing frame is made up of alternate sequences of stiff strips SR and strips with a certain degree of elasticity and flexibility that make up the slats SD.

The slats are arranged transversely, protruding towards the mattress, and possibly slightly curved.

In a preferred embodiment each strip that forms a slat SD is made up of a number of flexible sections, in series, SD1, SD2, SD3, between which there are stiff reinforcement strips RF, that are anchored to the rigid part of the containing frame. In this way it is possible to obtain the overall degree of flexibility desired, as a function of the specific rigidity of the material that is used, for example plastic, which is a material that is easy to process, besides being cheap.

The method of production of the bed according to this invention comprises the following steps:
construction of a bed comprising one or more mattress containing frames;
construction of the base of the containing frames made up of alternate sequences of stiff strips SR and strips with a certain degree of elasticity and flexibility that form the slats SD;
production of the stiff strips SR with the appropriate reinforcements to ensure stiffness;
arrangement of the slats transversely, protruding towards the mattress, using notches in the structure of the containing frame, possibly with a slightly curved shape;
production of each strip forming a slat SD made up of one or more flexible sections, in series, SD1, SD2, SD3, between which there are stiff reinforcement strips RF that are anchored to the rigid part of the containing frame.

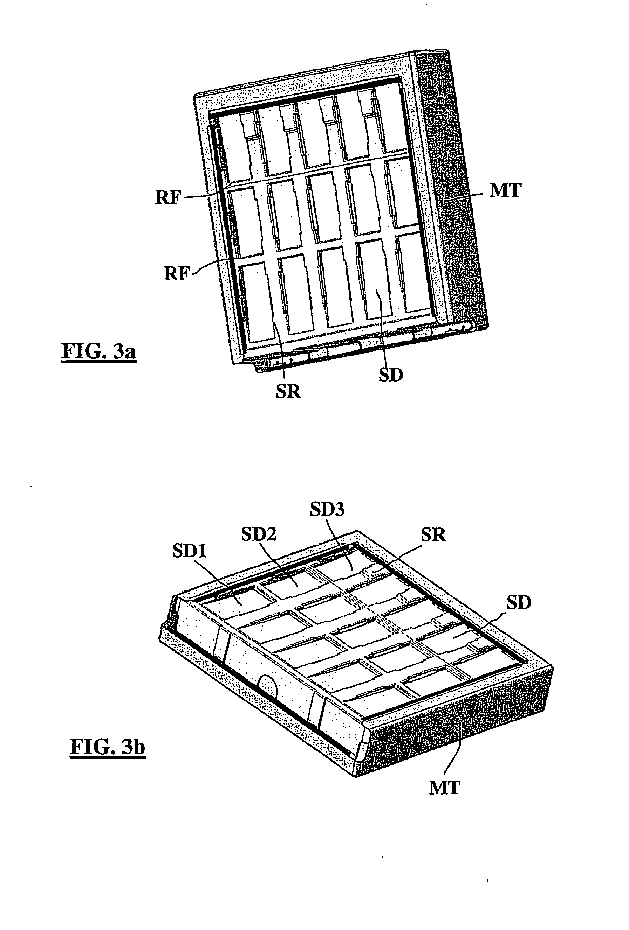

Figures 3a, 3b, illustrate more clearly the finished shape of the outside of the containing frame of the bed, in which the containing frames support a mattress MT with ordinary padding produced in a way that is known in the prior art. The presence of the slats under the mattresses gives the bed the overall compliance desired to ensure maximum comfort for the person lying down.

It will be apparent to the person skilled in the art that other alternative and equivalent embodiments of the invention can be conceived and reduced to practice without departing from the scope of the invention.

The bed can be made up of any number of containing frames, and may also comprise a single containing frame.

The strips that make up the slats of the containing frames can consist of any number of flexible sections in series, even just one.

The containing frames can be made of any type of plastics, for example type PP 50-70.

From the description set forth above it will be possible for the person skilled in the art to embody the invention without introducing any further construction details.

## Claims

1. Bed for a vehicle cabin, especially for an industrial vehicle, comprising one or more mattress containing frames (V1, V2, V3) that integrate flexible slats (SD) in place of a spring base to support the mattresses, **characterized in that** said flexible slats (SD) form strips placed transversely in sequence and arranged alternately with stiff strips (SR) and **in that** said flexible slats (SD) are protruding toward the mattress with respect to the stiff strips (SR).

2. Bed for a vehicle cabin according to claim 1, **characterized in that** said flexible slats (SD) are slightly curved.

3. Bed for a vehicle cabin according to claim 2, **characterized in that** each of said strips is made up of a number of flexible sections, in series (SD1, SD2, SD3), between which there are stiff reinforcement strips (RF) that are anchored to the rigid part of the containing frame.

4. Vehicle cabin, especially of an industrial vehicle, equipped with a bed according to any of the previous claims.

5. Method of producing a bed for a vehicle cabin, especially for an industrial vehicle, **characterized in that** it comprises the following steps:
construction of a bed comprising one or more mattress containing frames; construction of the base of the containing frames made up of alternate sequences of stiff strips (SR) and strips with a certain degree of elasticity and flexibility that form the slats (SD);
production of the stiff strips (SR) with the appropriate reinforcements to ensure stiffness;
arrangement of the slats transversely, protruding towards the mattress with respect to the stiff strips (SR), using notches in the structure of the containing frame;
production of each strip forming a slat (SD) made up of one or more flexible sections, in series (SD1, SD2, SD3), between which there are stiff reinforcement strips (RF) that are anchored to the rigid part of the containing frame.

6. Method according to claim 5, **characterized in that** the containing frames are made of a plastic material.

## Patentansprüche

1. Bett für eine Fahrzeugkabine, insbesondere für ein gewerbliches Fahrzeug, umfassend eine oder mehrere Matratzen aufnehmende Rahmen (V1, V2, V3), die flexible Latten (SD) statt Federn als Basis integrieren, um die Matratzen zu stützen, **dadurch gekennzeichnet, dass** die flexiblen Latten (SD) Streifen bilden, die querlaufend in Reihe platziert und abwechselnd mit steifen Streifen (SR) angeordnet sind und **dadurch**, dass die flexiblen Latten (SD) in Bezug auf die steifen Streifen (SR) in Richtung der Matratze vorragen.

2. Bett für eine Fahrzeugkabine nach Anspruch 1, **dadurch gekennzeichnet, dass** die flexiblen Latten (SD) geringfügig gekrümmt sind.

3. Bett für eine Fahrzeugkabine nach Anspruch 2, **dadurch gekennzeichnet, dass** die Latten jeweils aus einer Anzahl flexibler Abschnitte in Reihe (SD1, SD2, SD3) aufgebaut sind, zwischen denen steife Versteifungsstreifen (RF) vorgesehen sind, die an einem steifen Teil des aufnehemenden Rahmens verankert sind.

4. Fahrzeugkabine, insbesondere für ein gewerbliches Fahrzeug, das mit einem Bett gemäß einem der vorstehenden Ansprüche ausgestattet ist.

5. Verfahren zum Herstellen eines Betts für eine Fahrzeugkabine insbesondere für ein gewerbliches Fahrzeug, **dadurch gekennzeichnet, dass** es die folgenden Schritte umfasst:
Aufbau eines Betts umfassend einen oder mehrere Matratzen aufnehmende Rahmen;
Aufbau der Basis der aufnehmenden Rahmen, die aus abwechselnden Reihen aus steifen Streifen (SR) und Streifen mit einem gewissen Grad an Elastizität und Flexibilität, die die Latten (SD) bilden, aufgebaut sind;
Herstellen der steifen Streifen (SR) mit den geeigneten Verstärkungen, um die Steifigkeit zu sichern;
Anordnen der Latten quer und in Bezug auf die steifen Streifen (SR) in Richtung der Matratze vorragend, wozu Kerben in der Struktur des enthaltenden Rahmens genutzt werden;
Herstellen von Streifen, die jeweils eine Latte (SD) bilden und aus einem oder mehreren flexiblen Abschnitten in Reihe (SD1, SD2, SD3) aufgebaut und zwischen denen steife Verstärkungsstreifen (RF), die an dem steifen Teil des aufnehmenden Rahmens verankert sind, vorgesehen sind.

6. Verfahren nach Anspruch 5, **dadurch gekennzeichnet, dass** die aufnehmenden Rahmen aus einem Kunststoffmaterial auf gebaut sind .

## Revendications

1. Lit pour une cabine de véhicule, en particulier pour un véhicule industriel, comprenant un ou plusieurs matelas contenant des cadres (V1,V2,V3) qui intègrent des lattes flexibles (SD) à la place d'une base à ressorts pour supporter les matelas, **caractérisé en ce que** lesdites lattes flexibles (SD) forment des bandes placées transversalement en séquence et agencées alternativement avec des bandes rigides (SR) et **en ce que** lesdites lattes flexibles (SD) font saillie vers le matelas par rapport aux bandes rigides (SR).

2. Lit pour une cabine de véhicule selon la revendication 1, **caractérisé en ce que** lesdites lattes flexibles (SD) sont légèrement courbées.

3. Lit pour une cabine de véhicule selon la revendication 2, **caractérisé en ce que** chacune desdites bandes est constituée d'un nombre de sections flexibles, en séries (SD1, SD2, SD3), entre lesquelles il y a des bandes de renforcement rigides (RF) qui sont ancrées à la partie rigide du cadre de contènement.

4. Cabine de véhicule, en particulier d'un véhicule industriel, équipé d'un lit selon l'une des revendications précédentes.

5. Procédé de fabrication d'un lit pour une cabine de véhicule, en particulier pour un véhicule industriel, **caractérisé en ce qu'**il comprend les étapes suivantes:
- construction d'un lit comprenant un ou plusieurs matelas à cadres;
- construction de la base des cadres de contènement constitués de séquences alternantes de bandes rigides (SR) et de bandes ayant un certain degré d'élasticité et de flexibilité qui forment les lattes (SD);
- production des bandes rigides (SR) avec des renforcements appropriés pour assurer la rigidité;
- agencement des lattes transversalement, faisant saillie vers le matelas (1) par rapport aux bandes rigides (SR), en utilisant des encoches dans la structure du cadre de contènement;
- production de chaque bande formant une latte (SD) constituée d'une ou de plusieurs sections flexibles, en séries (SD1, SD2, SD3) entre lesquelles se trouvent des bandes de renforcement rigides (RF) qui sont ancrées à la partie rigide du cadre de contènement.

6. Procédé selon la revendication 5, **caractérisé en ce que** les cadres de contènement sont réalisés à partir d'un matériau plastique.
